Europäisches Patentamt

European Patent Office

Office européen des brevets

(19)

(11) Numéro de publication: **0 091 364**
**B1**

(12) **FASCICULE DE BREVET EUROPÉEN**

(45) Date de publication du fascicule du brevet:
24.09.86

(21) Numéro de dépôt: **83400656.1**

(22) Date de dépôt: **29.03.83**

(51) Int. Cl.⁴: **H 04 N 17/00,** H 04 J 3/14

(54) Equipement de mesure de voies numériques multiplexées par paquet dans un signal notamment analogique.

(30) Priorité: **29.03.82 FR 8205326**

(43) Date de publication de la demande:
**12.10.83 Bulletin 83/41**

(45) Mention de la délivrance du brevet:
**24.09.86 Bulletin 86/39**

(84) Etats contractants désignés:
**AT BE CH DE GB IT LI LU NL SE**

(56) Documents cité:
EP-A-0 011 014
EP-A-0 041 895
GB-A-1 524 812

**TOUTE L'ELECTRONIQUE, no. 464, mai 1981, pages 40-45, Paris, FR. G. BERTRON: "Les mesures analogiques et automatiques en TV"**
**IEEE TRANSACTIONS ON CONSUMER ELECTRONICS, vol. CE-27, no. 3, août 1981, pages 530-535, New York, USA A. VINCENT et al.: "Telidon teletext system field trials"**
**ELECTRONIQUE INDUSTRIELLE, no. 2, septembre 1980, pages 63-66, Paris, FR. L. BROUSSE: "Une conception nouvelle basée sur microprocesseur pour mesures séparées sur extrémités MIC"**
**NACHRICHTEN ELEKTRONIK, vol. 31, no. 7, juillet 1977, pages 186-188, Heidelberg, DE. F. MacKENZIE: "Zeitgemässe Mess- und Prüfmethoden für**

(73) Titulaire: **Etablissement Public TELEDIFFUSION DE FRANCE, 10, rue d'Oradour- sur- Glane, F-75732 Paris Cédex 15 (FR)**

(72) Inventeur: **Deparis, Georges, 2, rue Monge, F-94110 Arcueil (FR)**
Inventeur: **Duverne, Jacques, 91, Grand Rue, F-77410 Villevaude (FR)**
Inventeur: **Meillan, Philippe, 30, rue Barbès, F-92120 Montrouge (FR)**

(74) Mandataire: **Martinet & Lapoux, 62, rue des Mathurins, F-75008 Paris (FR)**

(56) Documents cité: (suite)
**Nachrichtenübertragungswege"**

LIBER, STOCKHOLM 1986

## Description

La présente invention concerne un équipement de mesure de voies numériques multiplexées par paquet dans un signal analogique ou numérique. Certains intervalles de temps constants du signal peuvent inclure d'une manière aléatoire des paquets à raison d'un paquet par intervalle de temps. Chaque paquet est constitué classiquement par un en-tête incluant l'adresse de la voie numérique respective et par un bloc de données composé de mots ayant un nombre prédéterminé de bits; les nombres de mots dans les blocs de données diffèrent d'un paquet à l'autre.

Un tel signal notamment analogique mélangé avec des voies numériques en mode-paquet peut être le signal vidéo d'une chaîne de télévision dans lequel les voies numériques sont prévues pour transmettre des magazines relatifs à différents services. Les paquets sont généralement insérés à la période de ligne au moins dans les parties actives des lignes libres du signal de synchronisation en trame, lesquelles lignes libres définissent des intervalles de temps ayant une durée constante.

La transmission de ce signal multiplex à travers les divers équipements du moyen de transmission entre l'émetteur relié au studio de la chaîne de télévision et par exemple le récepteur de télévision d'un abonné ou d'un relais de vidéotransmission engendrent certaines anomalies qui peuvent se traduire par des modifications des mots de données ou par des pertes de paquet ce qui est plus gênant. L'exploitation de signaux multiplex exige donc un équipement de mesure pour contrôler la bonne réception des paquets de données, par exemple en comparant au niveau du studio d'émission, les paquets émis et les paquets reçus à travers la moyen de transmission. L'interprétation de ces comparaisons permettra d'orienter les techniciens sur certains dispositifs probablement défaillants du moyen de transmission.

Le besoin de concevoir un tel équipement de mesure est déjà évoqué par G. BERTRON dans la revue " TOUTE L'ELECTRONIQUE ", No. 464, mai 1981, pages 40 à 45. Cet équipement est destiné à mesurer dans une voie numérique au standard DIDOM, défini dans la suite, les paramètres numériques suivants:

- nombre de bits faux;
- nombre de paquets perdus;
- taux d'erreur égal au rapport du nombre de bits faux au nombre de bits reçus; et
- taux de perte égal au rapport du nombre de paquets perdus au nombre de paquets reçus.

La présente invention a donc pour but de fournir un équipement de mesure de voies numériques multiplexées par paquet dans un signal analogique ou numérique en vue de détecter notamment le nombre de paquets reçus de chaque voie numérique à travers le moyen de transmission pendant une durée de mesure prédéterminée.

A cette fin, l'équipement de mesure est caractérisé en ce qu'il comprend en combinaison pour une voie numérique respective, des moyens pour détecter l'adresse de la voie numérique respective dans les paquets du signal, tel qu'un signal vidéo analogique ou numérique et des moyens pour compter le nombre des paquets reçus inclus dans la voie numérique respective en réponse aux adresses détectées de la voie numérique respective pendant une durée prédéterminée, des moyens de commande pour assigner chacun des moyens de détection d'adresse à l'une des voies numériques, et des moyens pour afficher ledit nombre de paquets reçus après ladite durée prédéterminée.

Selon d'autres caractéristiques de l'invention, l'équipement de mesure peut également afficher pour chaque voie numérique sélectionnée dans le signal après ladite durée prédéterminée cyclique:

- le nombre de paquets reçus erronés suite à la détection d'une faute dans un mot particulier inclus dans l'en-tête de chaque paquet et comprenant une partie de redondance selon un code prédéterminé;
- le nombre de paquets perdus non reçus;
- le nombre de mots de données reçus;
- le nombre de mots de données reçus erronés.

De préférence, les moyens d'affichage comprennent un récepteur de télévision classique muni d'une prise de péritélévision et un décodeur connu de messages alphanumériques pour convertir les résultats des mesures en des caractères affichables sur l'écran du récepteur de télévision. Ces moyens d'affichage permettent ainsi de réduire le coût de l'équipement de contrôle puisque celui-ci ne fait pas appel à des moyens d'affichage spécifiques.

Par ailleurs, l'équipement de mesure peut contrôler en temps partagé différentes voies numériques multiplexées dans plusieurs signaux analogiques ou numériques. Ces signaux peuvent être les signaux vidéo de différentes chaînes de télévision.

D'autres caractéristiques et avantages de la présente invention apparaîtront plus clairement à la lecture de la description qui suit de plusieurs modes de réalisation selon l'invention en référence aux dessins annexés correspondants, dans lesquels:

- la Fig. 1 montre une ligne d'un signal de télévision dans lequel est inclus un paquet de données;
- la Fig. 2 est un bloc-diagramme schématique de l'équipement de mesure;
- la Fig. 3 est un bloc-diagramme détaillé d'un capteur de l'équipement de mesure relatif à une voie numérique; et
- la Fig. 4 est un tableau des différents paramètres mesurés et calculés par l'équipement de mesure, lequel tableau est visualisé sur l'écran du récepteur de télévision inclus dans l'équipement.

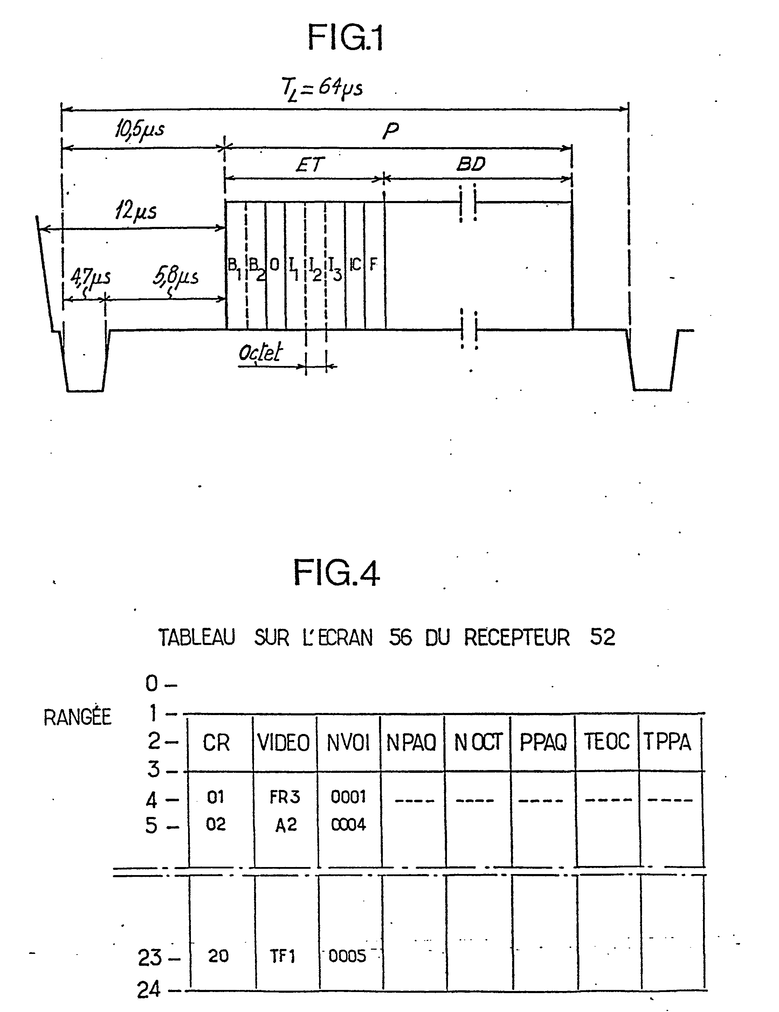

Afin de fixer les idées, le mode de réalisation de l'équipement de mesure selon l'invention a trait à la réception de voies numériques convoyant des paquets de données et multiplexées avec le signal d'image dans un canal de télévision aux normes L. Le signal d'image est un signal vidéo comprenant 625 lignes par image et ayant une fréquence de ligne égale à 15.625 Hz et une fréquence de trame égale à 50 Hz. Une ligne de ce signal vidéo est montrée à la Fig. 1 et représente un intervalle de temps constant ayant une période de ligne $T_L$ égale à 64 µs. Le début de la ligne est défini par le point à mi-amplitude du front avant de l'impulsion de synchronisation de ligne et, à la suite de ce point, se trouvent dans le signal de suppression de ligne ayant une durée de 12 µs, l'impulsion de synchronisation ayant une durée de 4,7 µs et le palier arrière du signal de suppression de ligne ayant une durée de 5,8µs. La fin du palier arrière délimite le front avant de la partie active de l'image ayant une durée de 52 µs environ.

La structure des paquets de données et leur multiplexage dans le signal d'image selon ce mode de réalisation préférée sont conformes aux normes du système de DIffusion de DONnées français DIDON (marque déposée). Les caractéristiques de ce système mises en oeuvre par la présente invention sont brièvement rappelées en référence notamment au numéro spécial de la revue "Radiodiffusion-Télévision", décembre 1980, Paris (FR), par Joseph BLINEAU, Guy DUBLET, Yves NOIREL et Jean-Claude VARDO, intitulé "DIDON: DIFFUSION DE DONNEES PAR PAQUET. ETAT DE LA TECHNIQUE", et par les spécifications techniques éditées par l'Etablissement Public dit "TELEDIFFUSION DE FRANCE", Version DZ A4-2, Septembre 1981, Paris (FR), intitulé "SYSTEME DE TELETEXTE". Procédés DIDON - ANTIOPE".

Dans un canal de télévision, les données à émettre sont fournies sous forme de suites d'octets par chacune de différentes sources. Une source peut être un terminal de données et particulièrement un terminal de télétexte tel que le codeur du système français ANTIOPE (marque déposée), ou système d'Acquisition Numérique et Télévisualisation d'Images Organisées en pages d'Ecritures. A l'émission, la codeur de télétexte émet un message ou magazine sous la forme d'une suite d'octets dans une voie numérique au débit réel de 6 203 125 bits/s. En fait, chaque suite d'octets est découpée en bloc de données BD. A chaque bloc de données est ajouté un en-tête ET, l'ensemble en-tête et bloc de données constituant un paquet P, comme montré à la Fig. 1.

A l'émission, le codeur du système de diffusion de données reçoit différentes voies numériques convoyant chacune ess paquets de données et les multiplexent paquet par paquet en insérant les paquets à raison d'un paquet par partie active de ligne libre. Une ligne libre est une ligne dont la partie active n'est pas occupée par le signal d'image, ce qui est généralement le cas des lignes de l'intervalle de synchronisation en trame ayant les numéros 6 à 22 dans la première trame ou trame impaire de l'image et les numéros 318 à 335 dans la seconde trame ou trame paire de l'image. Cependant, lorsqu'un programme de télédiffusion n'est diffusé, la plupart des autres lignes peuvent être occupées par des paquets ce qui correspond à l'utilisation plein canal. Ainsi, après multiplexage des voies numériques, le codeur du système de diffusion de données multiplèxe les paquets avec le signal vidéo, c'est-à-dire "module" le signal de luminance des lignes libres par les paquets. Comme on le voit sur la Fig. 1, le premier octet $B_1$ d'un paquet est inséré toujours au début de la partie active d'une ligne, 10, 5 µs après le front avant descendant de l'impulsion de synchronisation de ligne. Un paquet contient au plus 40 octets, ce qui correspond à l'occupation totale des $(40 \times 8)/6203125 \cong 52$ µs de la partie active de la ligne.

L'en-tête de chaque paquet comprend selon ce mode de réalisation 8 octets qui sont selon leur ordre d'émission:

- deux premiers octets $B_1$ et $B_2$ qui sont constitués par une suite de 1 et 0 alternés et forment une salve de synchronisation pour retrouver le signal d'horloge à la fréquence de bit dans le décodeur du système de diffusion de données à la réception;

- un troisième octet 0 formant un mot de synchronisation d'octet qui est identique pour tous les paquets quelle que soit la voie numérique et qui permet de retrouver le début d'un paquet à la réception et d'y reconstituer les octets suivants;

- trois octets $I_1$, $I_2$ et $I_3$ constituant un mot d'identification de voie numérique qui est le même pour tous les paquets provenant d'une même voie numérique;

- un octet IC constituant un indice de continuite qui est incrémenté de 1 modulo 16 à chaque paquet émis sur une même voie numérique et qui permet à la réception de détecter les pertes éventuelles de paquet dans un ensemble de seize paquets émis successivement sur une même voie numérique; et

- un octet F constituant un indicateur de format du paquet qui indique le nombre d'octets de données contenues dans le bloc de données BD du paquet P.

Les cinq derniers octets $I_1$, $I_2$, $I_3$, IC et F de l'en-tête constituent la partie "préfixe" du paquet et comprennent chacun quatre bits utiles d'information puis quatre bits de redondance. Les bits de redondance sont déduits des bits d'information selon un même code de Hamming et permettent ainsi à le réception de corriger des erreurs binaires simples dans les bits d'information.

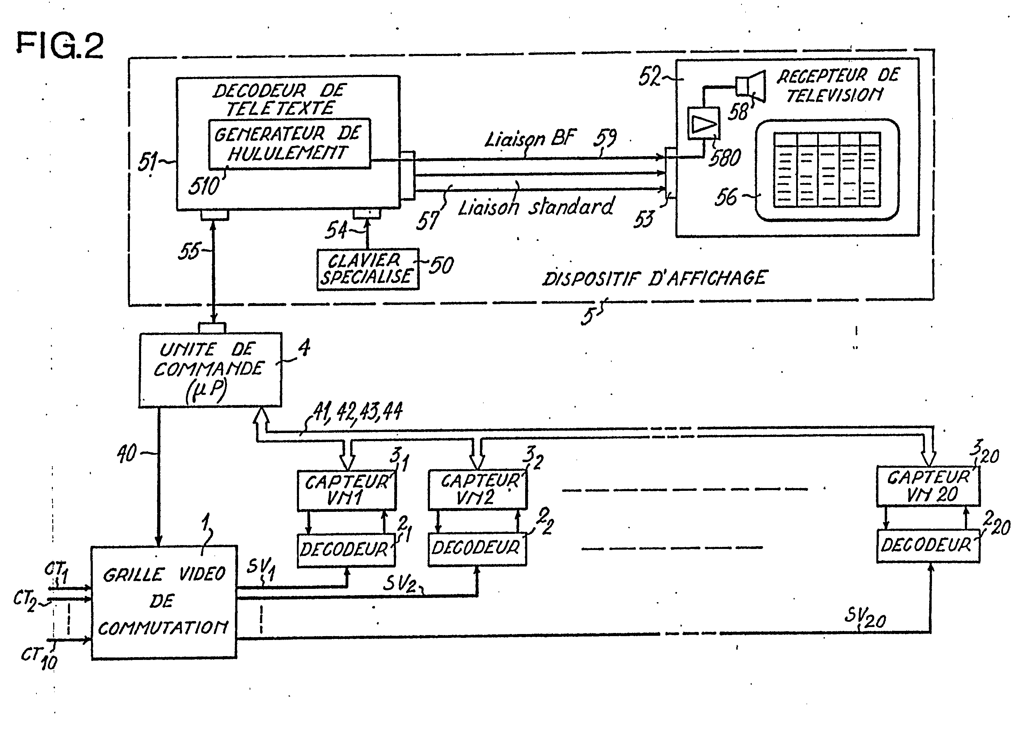

En se reportant maintenant à la Fig. 2, on a supposé que l'équipement de mesure peut recevoir simultanément dix canaux de télévision $CT_1$ à $CT_{10}$ et contrôler simultanément au plus vingt voies numériques $VN_1$ à $VN_{20}$. En pratique, les dix canaux de télévision $CT_1$ à $CT_{10}$ sont associés par paire correspondant au canal vidéo directement délivré par la régie d'une chaîne de télévision et à ce même canal vidéo après avoir transité par un ou plusieurs relais à vidéofréquence. Ainsi pour chaque chaîne de télévision, l'équipement pourra contrôler les pertes ou erreurs d'information entre les voies numériques d'un même canal vidéo respectivement émises et telles que reçues par un abonné.

L'équipement de contrôle selon l'invention comprend essentiellement une grille vidéo de commutation 1, vingt ensembles identiques formés chacun d'un décodeur de voie numérique $2_1$ à $2_{20}$ et d'un capteur $3_1$ à $3_{20}$ qui sont propres à contrôler respectivement vingt voies numériques sélectionnées $VN_1$ à $DN_{20}$, une unité de commande 4 et un dispositif d'affichage 5 pour visualiser les résultats des mesures.

La grille de commutation 1 reçoit les dix canaux de télévision $CT_1$ à $CT_{10}$. Elle restitue complètement le signal vidéo analogique de l'un des canaux de télévision sur un ou plusieurs de ses vingt canaux vidéos de sortie $SV_1$ à $SV_{20}$ chaque fois que l'unité de commande 4 sélectionne, via un bus d'adressage 40, une ou plusieurs voies numériques multiplexées dans ce canal de télévision. Comme on le verra dans la suite, cette sélection préalable est obtenue au moyen d'un clavier spécialisé 50 et d'un décodeur 51 propre à un type particulier de caractères d'écriture à afficher qui sont contenus dans le dispositif d'affichage 5. Ainsi au préalable, l'opérateur affecte à chaque ensemble formé par un décodeur de voie numérique $2_1$ à $2_{20}$ et un capteur $3_1$ à $3_{20}$, une voie numérique à contrôler de l'un des canaux de télévision $CT_1$ à $CT_{10}$. Les paires des adresses des ensembles $2_1$ à $2_{20}$ et $3_1$ à $3_{20}$ et des canaux de télévision entrants $CT_1$ à $CT_{10}$ correspondants sont mémorisées dans une mémoire morte reprogrammable incluse dans l'unité de commande 4 et peuvent être modifiées par l'intermédiaire du clavier 50 en cours de mesure, tout en gardant ls possibilité de reprendre à tout moment la sélection initiale.

La grille vidéo de commutation 1 peut être du type de celles décrites dans l'article de SURJON C., intitulé "Grilles de commutation à grande capacité pour centres de télévision", publié dans la revue Radiodiffusion-Télévision, N°67, pages 1 à 7, 1981, Paris (FR). L'unité de commande 4 comprend un microprocesseur du type INTEL 8085 par exemple.

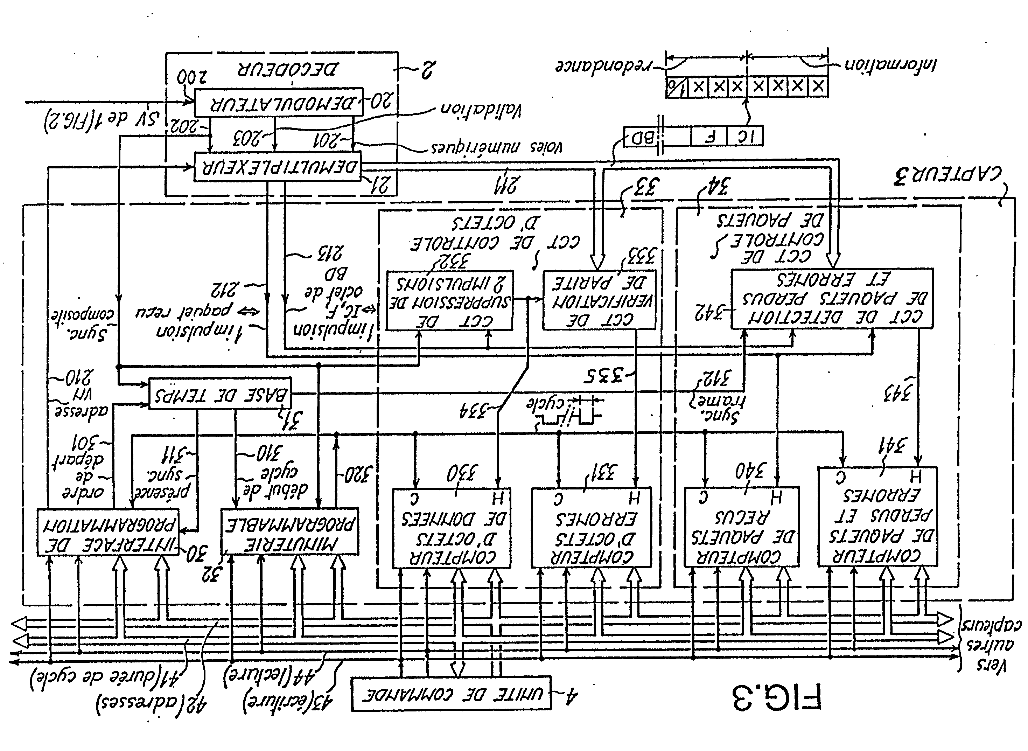

L'un des ensembles - décodeur 2 et capteur 3 - est maintenant décrit en référence à la Fig. 3.

Le décodeur 2 d'une voie numérique correspondante VN d'un canal de télévision entrant SV sélectionnée par la grille 1 est un décodeur du type DIDON qui est un circuit intégré fabriqué par TEXAS-FRANCE et dont le démodulateur 20 et le démultiplexeur 21 sont respectivement des circuits SN 93 et TMS 3534 AN. On en rappellera brièvement le principe.

Le démodulateur 20 du décodeur 2 reçoit à son entrée vidéo 200 le signal vidéo correspondant SV dans lequel est multiplexée, entre autres, la voie numérique de données VN à traiter. La fonction du démodulateur 20 est d'extraire les voiea numériques de données du signal vidéo analogique entrant SV et de les délivrer en série sous forme numérique au démultiplexeur 21, via un fil 201. Le démodulateur 20 extrait également le signal de synchronisation composite en ligne et trame qui est transmis au démultiplexeur 21 et au capteur 3 via un fil 202. En dépendance du signal de synchronisation composite, le démodulateur 20 cherche les deux octets de synchronisation de bit $B_1$ et $B_2$ dans chaque ligne du signal vidéo pour en déduire une impulsion de validation correspondant au début d'un paquet retrouvé. De telles impulsions de validation de paquets sont transmises au démultiplexeur 21 via un fil 203 et ont leurs créneaux correspondant au troisième octet 0 de chaque paquet retrouvé.

Le démultiplexeur 21 du décodeur 2 a pour fonction d'extraire des paquets transmis sur le fil 201 les paquets de la voie numérique VN pour laquelle l'ensemble décodeur 2 et capteur 3 a été sélectionné. A cet égard, un bus d'adressage 210 du démultiplexeur 21 reçoit, via un bus de données bidirectionnel 41 de l'unité de commande 4 et une interface de programmation 30 du capteur 3, l'adresse de la voie numérique VN à contrôler qui est mémorisée dans une mémoire morte reprogrammable du démultiplexeur 21. Chaque fois que le démultiplexeur reçoit une impulsion de validation de paquet sur le fil 203, il compare l'adresse mémorisée et l'adresse contenue dans le mot d'identification $1_1$ à $1_3$ du paquet. Si la comparaison est positive, le paquet appartient à la voie numérique à contrôler. Les octets IC, F et du bloc de données BD de ce paquet peuvent être transmis au capteur 3 sur un bus de sortie à 8 fils 211, simultanément à la délivrance d'une impulsion de détection du paquet sur un fil de sortie 212 vers le capteur 3. Puis le démultiplexeur 31 fournit une impulsion de détection d'octet sur un fil 213 au capteur 3 chaque fois qu'un octet IC, F et du bloc de données BD du paquet est transmis sur le bus de sortie 211 du démultiplexeur, jusqu'à ce que le dernier octet du bloc de données BD soit détecté, en dépendance de l'octet indicateur de format F.

Le démultiplexeur 21 effectue d'autres fonctions et notamment décode l'octet d'indice de continuité IC afin de corriger éventuellement les quatre bits de cet octet selon les tables du code de Hamming qui ont été préalablement enregistrées par programmation dans le démultiplexeur. Le circuit correcteur de Hamming inclus dans le démultiplexeur 21 ne peut que corriger certaines erreurs prédéterminées. Par exemple lorsque l'erreur porte sur deux bits utiles, la correction n'est pas possible, et le correcteur l'indique par l'insertion d'un bit à l'état 1 à la dernière position d'élément binaire de poids faible de l'octet IC. Dans le cas contraire, un bit à l'état 0 à la même position indique que l'octet d'indice de continuité est valable quant à son codage. L'octet IC avec son bit d'indication d'erreur est transmis sur le bus 211.

La capteur 3 tel que montré à la Fig. 3 comprend, outre l'interface de programmation 30, une base de temps 31 et une minuterie programmable 32 qui fournissent tous les signaux d'horloge nécessaires au contrôle des paquets trouvés de la voie numérique. La base de temps 31 reçoit sur le fil 202 les impulsions de la synchronisation composite ainsi que sur un fil 301 une impulsion qui indique l'ordre de départ d'un cycle de mesure et qui est fourni par l'unité de commande 4 via le bus 41 et l'interface 30. Le début du cycle de mesure est déterminé par l'unité de commande 4 qui travaille en temps partagé relativement aux échanges d'informations, d'adresses et de commandes avec les différents capteurs sélectionnés $3_1$ à $3_{20}$. La durée d'un cycle est fixée normalement à une seconde. La base de temps 31 synchronise l'ordre de départ d'un cycle indiqué par l'unité 4 sur le fil 301 avec le début de l'intervalle de suppression de trame qui correspond à la ligne 6 pour une trame impaire et à la ligne 318 pour une trame paire. Le début du cycle de mesure correspond au début de l'intervalle de suppression de trame qui est détecté dans le signal de synchronisation composite sur le fil 202 par la base de temps 31, laquelle l'indique via un fil 310 à la minuterie 32. La minuterie 32 reçoit le signal de synchronisation composite sur le fil 202 afin qu'un mot représentatif de la durée prédéterminée d'un cycle de mesure soit délivré via le bus 41 de l'unité de commande 4 avant la réception de l'ordre de départ de cycle par la base de temps 31. Une sortie 320 de la minuterie fournit alors une impulsion de cycle dont le front montant est synchrone avec l'impulsion de début de cycle sur le fil 310 et dont la largeur est égale à la durée du cycle. L'impulsion de cycle est transmise à l'unité de commande 4 via l'interface 30 et le bus 41 laquelle unité décidera le départ d'un nouveau cycle en fonction de sa disponibilité relativement aux traitements en cours des informations des autres capteurs. La base de temps 31 délivre également un signal de présence de synchronisation de ligne sur un fil 311 à l'unité 4, via l'interface 30 et le bus 41, qui est à l'état permanent 1 tant qu'une impulsion de synchronisation de ligne convenable est détectée par la base de temps toutes les 64 µs. Si la synchronisation de ligne n'est pas détectée, l'unité 4 signalera que les mesures relevées sont erronées.

Les fonctions essentielles de capteur 3 sont réalisées par un circuit de contrôle d'octets 33 et un circuit de contrôle de paquets 34. Chacun de ces circuits 33, 34 comprend deux compteurs programmables, l'un 330, 340 comptant le nombre d'octets ou de paquets détectés pendant la durée du cycle, l'autre 331, 341 comptant le nombre d'octets erronés ou de paquets perdus et erronés pendant la durée du cycle.

Avant l'ordre de départ, les compteurs 330, 331, 340 et 341, ainsi que l'interface de programmation 30 sont adressés successivement par l'unité de commande 4 via un bus d'adressage 42 propre au capteur considéré 3. Par un fil de commande en écriture 43, l'unité 4 commande la remise à zéro des compteurs et l'écriture de mémoires internes à la minuterie 32 et l'interface 30. Puis la minuterie 32 reçoit le mot représentatif de la durée prédéterminée du cycle tandis que l'interface 30 transmet au démultiplexeur 21 du décodeur 2, via le bus 210, des informations utiles à la programmation du démultiplexeur; ces informations sont transmises par l'unité 4 sur son bus 41 avant l'ordre de départ du cycle. L'impulsion de cycle sur le fil de sortie 320 de la minuterie 32 est appliquée aux entrées C de déclenchement de comptage des compteurs 330, 331, 340 et 341 ainsi qu'à l'interface 30 afin que celle-ci délivre à l'unité de commande 4 un signal de fin de cycle à travers le bus 41. Après la fin du cycle de contrôle, l'unité de commande 4 adresse successivement les compteurs, via le bus d'adressage 42 et un fil de commande en lecture 44, afin que leurs comptes soient traités selon le programme de l'unité 4 et visualisés par le dispositif 5 comme on le verra dans la suite.

Le circuit de contrôle d'octets 33 comprend également un circuit de suppression de deux impulsions 332 et un circuit de vérification de parité 333.

Les impulsions sur le fil 213 qui indiquent respectivement les détections des octets IC et F et des octets du bloc de données, et le signal de synchronisation composite sur le fil 202 sont appliqués à l'entrée du circuit 332. Ce dernier circuit supprime les deux premières impulsions indiquant la détection des octets IC et F et ne restituent sur un fil de sortie 334 que les impulsions indiquant la détection des octets du bloc de données BD de chaque paquet trouvé dans la voie numérique. Le fil 334 est relié à l'entrée d'horloge H du compteur d'octets 330 et à une entrée du circuit de vérification de parité 333. Le compteur 330 compte ainsi le nombre d'octets de données sur la voie numérique transmis pendant la durée du cycle.

Tous les octets dans le bloc de données d'un paquet peuvent avoir une parité prédéterminée imposée à l'émission, ou bien chaque octet présente une parité respective qui est indiquée par l'état d'un bit de parité, les sept autres bits de l'octet constituant l'information. Le circuit de vérification de parité 333 est adapté au mode de parité choisi à l'émission. Il reçoit les octets IC, F et de données sur le bus de sortie 211 du démultiplexeur 21 et vérifie uniquement pour chacun des octets de données indiqués par les impulsions sur le fil 334 si l'octet reçu a la parité correspondante. Lorsque la parité de l'octet est différente de celle attendue, au moins l'un des bits d'information de l'octet est erroné, ce qui est indiqué par l'application d'une impulsion à l'entrée d'horloge H du compteur 331, via un fil de sortie 335 du circuit 333. Le compteur 331 compte donc les octets erronés de données sur la voie numérique pendant le cycle de mesure.

Dans le circuit de contrôle de paquets 34, le compteur 340 reçoit sur son entrée d'horloge H les impulsions délivrées par le fil 212 et compte donc les paquets détectés de la voie numérique et reçus pendant la durée du cycle.

Le circuit de contrôle de paquets 34 comprend également un circuit de détection de paquets perdus et erronés 342. Les octets IC, F du bloc de données des paquets de la voie numérique sur le bus 211 ainsi que le signal de synchronisation de trame qui est délivré sur un fil de sortie 312 de la base de temps 31, sont appliqués à des entrées du circuit 342. Seul le premier octet de chaque paquet sur le bus 211 qui correspond normalement à l'indice de continuité IC est utilisé dans le circuit 342. La présence de l'octet d'indice de continuité IC sur le bus 211 est signalée par la première impulsion appliquée sur le fil 213 faisant suite à une impulsion appliquée sur le fil 212 indiquant la détection d'un paquet. Pour ces raisons, les fils de sortie 212 et 213 du démultiplexeur 21 sont reliés à deux autres entrées du circuit 342. Pour chaque paquet trouvé par le démultiplexeur 21, c'est-à-dire à chaque impulsion transmise sur le fil 212, le circuit 342 mémorise l'octet IC de ce paquet et détecte le bit de faible poids de l'octet IC sur le bus 211. Si ce bit est à l'état 1, le paquet transmis est erroné. Puis, dans le cas où le bit de faible poids est à l'état "O" ce qui indique que le paquet a été validé par le démultiplexeur 21, le circuit 342 compare les bits utiles de l'octet IC du paquet reçu et de l'octet mémorisé IC du paquet précédemment reçu. Si l'indice de continuité IC du paquet reçu est supérieur à celui du paquet précédemment reçu augmenté de l'unité modulo 16, la différence de ces deux indices de continuité moins l'unité est égale au nombre de paquets perdus dans la voie numérique entre la transmission des deux paquets reçus.

Un fil de sortie 343 du circuit 342 délivre une impulsion pour chaque paquet erroné et autant d'impulsions qu'il y a de paquets perdus à l'entrée d'horloge H du compteur 341. Pendant la durée d'un cycle, le compteur 341 compte ainsi les paquets erronés et perdus dans la voie numérique.

On notera que la durée prédéterminée de cycle de contrôle de chaque capteur peut être choisie indépendamment de celles des autres capteurs par programmation de l'unité 4 au moyen du clavier 50. Mais la durée du cycle peut être modifiée automatiquement par l'unité 4 lorsque, au cours du dernier cycle de contrôle, l'un des compteurs 330 et 340 a atteint son compte maximal; ceci signifie que tous les octets ou paquets reçus pendant le cycle n'ont pu être comptés. Par exemple, si la durée du cycle est initialement égale à une seconde, l'unité 4 délivre via le bus 41 à la minuterie programmable 32 une nouvelle durée de cycle égale à un multiple entier de la durée initiale, soit par exemple une durée de 20 secondes égale à la période de trame.

En se reportant à nouveau à la Fig. 2, le dispositif d'affichage 5 comprend également des moyens pour visualiser les résultats obtenus dans chacun des capteurs $3_1$ à $3_{20}$. Les moyens de visualisation sont sous la forme d'un récepteur de télévision 52 équipé d'une prise de péritélévision 53. L'affichage des résultats est commandé par l'unité de commande 4 à travers le décodeur de télétexte 51 qui décode des caractères d'écriture selon le langage ANTIOPE. Le clavier 50 comporte 13 touches et délivre des instructions notamment pour faire correspondre le numéro de chaque capteur à un numéro de voie numérique incluse dans un canal vidéo, à travers un bus à 9 fils 54 au décodeur 51 puis à travers un canal numérique normalisé bidirectionnel 55 à 19200 bit/s à l'unité 4, le décodeur étant transparent aux instructions dans ce cas. Suivant l'autre direction, lorsque des résultats de mesure sont à afficher sur l'écran 56 du récepteur de télévision 52, l'unité 4 transmet ces résultats sous une forme compatible avec le langage ANTIOPE au décodeur 51 à travers le canal numérique 55, et de là au récepteur 52 à travers une liaison standard 57 desservant la prise de péritélévision 53.

Ainsi le décodeur ANTIOPE 51 est utilisé en mode interactif, c'est-à-dire que ce décodeur peut non seulement recevoir des informations de l'unité 4 mais également transmettre à celle-ci des instructions.

Les résultats des mesures sont présentés sous la forme d'un tableau montré à la Fig. 4. Ce tableau est inscrit au centre de l'écran 56 à la fréquence de trame d'un signal de télévision, c'est-à-dire 50 fois par seconde. Il comporte horizontalement 25 rangées ayant chacune 40 emplacements élémentaires (ou colonnes) correspondant chacune à un caractère alphanumérique. Les rangées sont numérotées 0 à 24 de baut en bas. Dans la rangée N° 2 sont inscrites en permanence les abréviations suivantes:

CR = numéro du capteur;
VIDEO = nom du canal vidéo;
NVOI = numéro de voie numérique;
NPAQ = nombre de paquets reçus;
NOCT = nombre d'octets reçus;
PPAQ = nombre de pertes de paquets;
TEOC = taux d'erreurs d'octets;
TPPA = taux de pertes de paquets.

Dans les rangées suivantes 4 à 23 et sous les abréviations précédentes sont inscrites pour chaque capteur $3_1$ à $3_{20}$, le numéro du capteur, les deux numéros caractérisant la voie numérique contrôlée par le capteur et le canal vidéo incluant la voie numérique ainsi que les cinq paramètres de mesures NPAQ à TPPA pouvant varier d'un cycle de mesure à l'autre. En fonctionnement normal, l'affichage est constitué de caractères blancs ou jaunes, sur fond noir, sauf pour le nom des canaux vidéos qui ont respectivement différentes couleurs afin de faciliter la lecture. Les trois numéros CR, VIDEO et NVOI ne varient pas, sauf dans le cas d'une affectation pour une nouvelle voie numérique obtenue au moyen du clavier 50. Les six paramètres NPAQ et TPPA sont transmis par l'unité 4 au décodeur 51, lequel les traduit pour leur affichage sur l'écran 56, à la fin de chaque cycle de contrôle d'un capteur. Les paramètres NPAQ, NOCT et PPAQ sont les comptes des compteurs de paquets 340, d'octets 330 et de pertes de paquets 341. Le paramètre TEOC est égal au rapport: compte du compteur d'octets erronés 331/NOCT, et le paramètre TPPA est égal au rapport (PPAQ/NPAQ). Ces deux rapports sont calculés par l'unité 4.

A la fin de chaque cycle de contrôle relatif à un capteur $3_1$ à $3_{20}$, l'unité 4 mémorise les cinq paramètres NPAQ à TPPA et les compare respectivement avec ceux précédemment mémorisés. Si au moins l'un de ces paramètres est modifié, la totalité de la rangée correspondant au capteur est réécrite sur l'écran 56, ou selon un mode de réalisation préférée, les paramètres uniquement modifiés sont transmis sur le canal numérique 55 ce qui permet de ne pas encombrer le trafic sur ce canal 55 et la liaison standard 57. Pour chaque durée de cycle, des seuils prédéterminés à ne pas dépasser sont comparés aux paramètres TEOC et TPPA. Par exemple pour une durée de cycle égale à une seconde, si TEOC et TPPA sont respectivement supérieurs à $10^{-4}$ et $10^{-2}$, un signal d'alarme est généré par l'unité 4. Ce signal d'alarme est transformé dans le décodeur 51 d'une part en un signal d'alarme visuel sur l'écran et, d'autre part, en un signal d'alarme sonore au moyen du haut-parleur 58 du récepteur de télévision 52 pendant une durée prédéterminée. Le signal d'alarme visuel se traduit par un clignotement du paramètre et un changement de couleur prédéterminé. Le signal d'alarme sonore est déclenché par un signal à audio-fréquence qui est fourni par un générateur à basse fréquence de hululement 510 inclus dans le décodeur 51, à travers une liaison à basse fréquence 59 reliée au circuit audio 580 du haut-parleur 58 du récepteur de télévision.

D'autres telles alarmes peuvent être également commandées par l'unité 4, par exemple lors de l'absence du signal vidéo ou de la voie numérique associée au capteur. La génération d'alarmes est également prévue lorsque le compte de l'un des compteurs 330, 331, 340 et 341 du capteur dépasse son compte maximum, ce qui indique à l'opérateur que le cycle de contrôle suivant a une durée plus longue, par exemple égale à 20 ms. Au cas où aucune voie numérique n'a été affectée à un capteur, il n'y a pas d'alarmes et seul reste affiché le numéro CR du capteur sur la rangée correspondante, les autres numéros et paramètres de cette rangée étant à zéro.

D'autres modes de réalisation peuvent être facilement conçus par l'homme du métier à partir de la description précédente. Ainsi rentrent dans l'objet de l'invention tout équipement de mesure de voies numériques d'un seul signal notamment analogique, tel qu'un signal vidéo à la période de ligne, ou ne comportant que l'un ou plusieurs des moyens essentiels de contrôle et de mesure inclus dans un capteur, tels que les moyens relatifs au comptage de paquets 2 et 340, au comptage des paquets erronés et/ou perdus 2, 342 et 341, au comptage des octets 2, 332 et 330 ou au comptage des octets de données erronés 2, 332, 333 et 331, ou bien encore relatifs à des paramètres issus de combinaison des résultats évoqués ci-dessus. En outre, moyennant quelques modifications accessibles à l'homme du métier, le décodeur 2 peut être remplacé par un décodeur qui décode des voies numériques multiplexées dans un signal numérique, tel qu'un signal numérique vidéo.

**Revendications**

1 - Equipement de mesure de voies numériques (VN) multiplexées par paquet dans un signal notamment analogique (SV) ayant des intervalles de temps constants $(T_L)$ incluant chacun un paquet (P), chaque paquet (P) étant constitué par un en-tête (ET) incluant l'adresse (I) de la voie numérique respective (VN) et par un bloc de données (BD) composé de mots (octets) ayant un nombre prédéterminé de bits, caractérisé en ce qu'il comprend en combinaison pour une voie numérique respective (VH), des moyens (2) pour détecter l'adresse (I) de la voie numérique respective dans les paquets du signal (SV) et des moyens (340) pour compter le nombre de paquets reçus (NPAQ) inclus dans la voie numérique respective (VN) en réponse aux adresses détectées de la voie numérique respective pendant une durée prédéterminée (durée de cycle), des moyens de commande (4, 50) pour assigner chacun des moyens de détection d'adresse (2) à l'une des voies numériques, et des moyens (5) pour afficher ledit nombre de paquets reçus après ladite durée prédéterminée.

2 - Equipement conforme à la revendication 1, pour lequel au moins un mot (IC) de l'en-tête de chaque paquet comprend une partie d'information et une partie de redondance déduite de la partie d'information selon un code prédéterminé, caractérisé en ce qu'il comprend en combinaison avec les moyens de détection d'adresse (2) d'une voie numérique respective (VN), des moyens (21, 342) pour décoder la partie de redondance dudit mot (IC) de l'en-tête de chaque paquet reçu de la voie numérique respective (VN), des moyens (341) pour compter le nombre de paquets reçus erronés en réponse aux parties de redondance décodées ne correspondant pas aux parties d'information desdits mots (IC) des en-têtes de paquets reçus de la voie numérique pendant ladite durée prédéterminée, et des moyens (5) pour afficher ledit nombre de paquets reçus erronés après ladite durée prédéterminée.

3 - Equipement conforme à la revendication 1 ou 2 pour lequel au moins un mot (IC) de l'en-tête des paquets de chacune des voies numériques est incrémenté d'une unité modulo un nombre entier prédéterminé (16) à chaque paquet de la voie numerique (VN) émis dans le signal (SV),
caractérisé en ce qu'il comprend en combinaison avec les moyens de détection d'adresse (2) d'une voie numérique respective (VN), des moyens (342) pour mémoriser ledit mot (IC) de l'en-tête de chaque paquet reçu de la voie numérique respective (VN), des moyens (342) pour comparer ledit mot (IC) de l'en-tête du paquet reçu avec ledit mot mémorisé (IC) de l'en-tête du paquet précédemment reçu, des moyens pour compter le nombre de paquets perdus en réponse à des différences desdits mots (IC) de deux paquets successifs reçus de la voie numérique respective supérieures à l'unité modulo ledit nombre prédéterminé pendant la durée prédéterminée, et des moyens (5) pour afficher ledit nombre de paquets perdus après ladite durée prédéterminée.

4 - Equipement conforme aux revendications 2 et 3, caractérisé en ce qu'il comprend des moyens (5) pour afficher le nombre total de paquets erronés et perdus (PPAQ) après ladite durée prédéterminée.

5 - Equipement conforme à la revendication 4, caractérisé en ce qu'il comprend des moyens (4) pour calculer au moins l'un des taux (TPPA) de paquets erronés, de paquets perdus et de paquets erronés et perdus par rapport au nombre de paquets reçus (NPAQ) et des moyens (5) pour afficher au moins le taux calculé (TPPA) après la durée prédéterminée.

6 - Equipement conforme à l'une des revendications 1 à 5, caractérisé en ce qu'il comprend en combinaison avec les moyens de détection d'adresse (2) d'une voie numérique respective (VN) des moyens (21, 332) pour générer une impulsion en réponse à chaque mot des blocs de donnécs (BD) des paquets reçus de la vois numérique respective (VN), des moyens (330) pour compter le nombre de mots de données reçus (NOCT) dans la voie numérique respective en réponse aux impulsions détectées pendant la durée prédéterminée, et des moyens (5) pour afficher ledit nombre de mots de données reçus après ladite durée prédéterminée.

7 - Equipement conforme à la revendication 6 dans lequel chaque mot de données présente une parité prédéterminée, caractérisé en ce qu'il comprend en combinaison avec les moyens de détection d'adresse (2) et les moyens de génération d'impulsions (21, 332) d'une voie numérique respective (VN), des moyens (333) pour vérifier la parité des mots de données des paquets reçus de la voie numérique respective, des moyens (331) pour compter le nombre de mots de données reçus erronés en réponse à des parités différentes des parités prédéterminées respectives des mots de données de la voie numérique respective pendant la durée prédéterminée, et des moyens (5) pour afficher ledit nombre de mots de données reçus erronés après ladite durée prédéterminée.

8 - Equipement conforme à la revendication 7, caractérisé en ce qu'il comprend des moyens (4) pour calculer le taux (TEOC) de mots de données erronés par rapport au nombre de mots de données reçus et des moyens (5) pour afficher le taux calculé (TEOC).

9 - Equipement conforme à l'une des revendications 1 à 8, caractérisé en ce que les moyens de commande (4) adressent en temps partagé les moyens de comptage (330, 331, 340, 341) assignés à des voies numériques respectives pour remettre à zéro chacun desdits moyens de comptage avant la durée prédéterminée assignée à la voie numérique respective et pour lire les comptes des moyens de comptage respectifs après ladite durée prédéterminée en vue de leur affichage.

10 - Equipement conforme à la revendication 9, caractérisé en ce que la durée prédéterminée assignée à chaque voie numerique est cyclique en fonction de la disponibilité des moyens de commande (4) pour traiter notamment les comptes et adressages relatifs aux autres voies numériques assignées.

11 - Equipement conforme à l'une des revendications 1 à 10, caractérisé en ce que les moyens d'affichage (5) comprennent un récepteur de télévision (52) ayant une prise de péritélévision (53), un clavier de touches (50) pour assigner dans les moyens de commande (4) chacun des moyens de détection d'adresse (2) à une voie numérique (VN), et des moyens de décodage (51) intermédiaires entre la prise de péritélevision (53) et un canal numérique de sortie (55) des moyens de commande (4) pour décoder des informations, telles que le numéro des moyens de détection d'adresse, l'adresse de la voie numérique et les comptes, en des caractères propres à être Visualisés sur l'écran (56) du récepteur de télévision.

12 - Equipement conforme à la revendication 11, caractérisé en ce que les informations relatives aux voies numeriques sont disposées sur des rangées horizontales dans un tableau (Fig. 4) inscrit sur ledit écran (5b) sous la commande des moyens de décodage (51).

13 - Equipement conforme à la revendication 11 ou 12, caractérisé en ce que les moyens de décodage (51) produisent une alarme en réponse à un paramètre de mesure à afficher (compte ou taux) supérieur à un seuil prédéterminé respectif relativement à chaque voie numérique (VN).

14 - Equipement conforme à la revendication 13, caractérisé en ce que les moyens de décodage (51) traduisent l'alarme visuellement sur l'écran par un clignotement, changement de couleur ou analogue du paramètre.

15 - Equipement conforme à la revendication 13 ou 14, caractérisé en ce que les moyens de décodage (51, 510) traduisent l'alarme par un hululement émis par le haut-parleur (58) du récepteur de télévision (52).

16 - Equipement conforme à l'une des revendications 13 à 15, caractérisé en ce que, lorsque le compte maximum de moyens de comptage est atteint au cours d'une durée prédéterminée assignée à une voie numerique, une alarme est produite et les moyens de commande (4, 32) assignent une durée prédeterminée plus longue.

17 - Equipement conforme à l'une des revendications 1 à 16 pour mesurer des voies numériques (VN) multiplexées par paquet dans des signaux notamment analogiques (CT), caractérisé en ce qu'il comprend des moyens de commutation (1) recevant lesdits signaux (CT) pour assigner sélectivement chacun des moyens de détection d'adresse (2) à l'une des voies numériques de signaux, les moyens de détection d'adresse assignés à des voies numériques d'un même signal recevant uniquement ledit signal (SV) à partir des moyens de commutation.

18 - Equipement conforme aux revendications 11 et 17, caractérisé en ce que le numéro du signal (VIDEO) est également affiché sur l'écran (56) pour chaque voie numérique assignée.

**Patentansprüche**

1. Einrichtung zum Messen der paketweise in einem im wesentlichen analogen Signal (SV) mit konstanten Zeitintervallen ($T_L$) multiplexten digitalen Kanälen (VN), mit jeweils einem Paket (P), bestehend aus einem Kopfteil (ET) mit der Adresse (I) des betreffenden digitalen Kanals (VN) und einem aus Worten (Oktetten) mit einer vorgegebenen Anzahl von Bits zusammengesetzten Datenblock (BD), dadurch gekennzeichnet, daß die Einrichtung für einen jeweiligen der digitalen Kanäle (VN) in Kombination Mittel (2) zum Erkennen der Adresse (I) des jeweiligen digitalen Kanals in den Signalpaketen (SV), und Mittel (340) zum Errechnen der Anzahl der in dem jeweiligen digitalen Kanal (VN) beinhalteten empfangenen Pakete (NPAQ) in Antwort auf während einer vorgegebenen Dauer (Zyklendauer) erkannten Adressen des jeweiligen digitalen Kanals, Befehlsmittel (4, 50) zum Bestimmen eines jeden der Mittel zum Erkennen der Adresse (2) von einem der digitalen Kanäle, sowie Mittel (5) zum Angeben der Anzahl der nach der genannten vorgegebenen Dauer empfangenen Pakete aufweist.

2. Einrichtung nach Anspruch 1, wobei mindestens ein Wort (IC) des Kopfteils jedes der Pakete einen Informationsteil und einen von dem Informationsteil nach einem vorgegebenen Code abgeleiteten Redundanzteil aufweist, dadurch gekennzeichnet, daß die Einrichtung in Kombination mit den Mitteln zum Erkennen der Adresse (2) eines jeweiligen digitalen Kanals (VN) Mittel (21, 342) für das Decodieren des Redundanzteils des Wortes (IC) des Kopfteils von jedem empfangenen Paket des jeweiligen digitalen Kanals (VN), Mittel (341) zum Zählen der Anzahl der fehlerhaft empfangenen Pakete in Antwort auf die decodierten Redundanzteile, die den Informationteilen des jeweiligen Worts (IC) der Kopfteile der von dem digitalen Kanal während der vorgegebenen Zeitdauer empfangenen Pakete nicht entsprechen, sowie Mittel (5) zum Angeben der Anzahl der fehlerhaft empfangenen Pakete nach der vorgegebenen Zeitdauer aufweist.

3. Einrichtung nach Anspruch 1 oder Anspruch 2, wobei mindestens ein Wort (IC) des Kopfteils der Pakete jeder der digitalen Kanüle um einen Einer-Modulo einer vorgegebenen ganzen Zahl (16) für jedes Paket der im Signal gesandten digitalen Kanäle (VN) inkrementiert wird, dadurch gekennzeichnet, daß sie in Kombination mit den Mitteln zum Erkennen der Adresse (2) eines jeweiligen digitalen Kanals (VN) Mittel (342) zum Speichern des Wortes (IC) des Kopfteils jedes der von dem jeweiligen digitalen Kanal (VN) empfangenen Pakets, Mittel (342) zum Vergleichen des Worts (IC) des Kopfteils des empfangenen Pakets mit dem gespeicherten Wort (IC) des Kopfteils des vorangehend empfangenen Pakets, Mittel zum Zählen der Anzahl verlorengegangener Pakete in Antwort auf die Unterschiede der Worter (IC) von zwei aufeinander folgenden, von dem jeweiligen digitalen Kanal empfangenen Paketen, die höher sind als das Einer-Modulo der vorgegebenen Anzahl während der vorgegebenen Zeitdauer, und Mittel (5) zum Angeben die Anzahl der nach der vorgegebenen Zeitdauer verlorengegangenen Pakete aufweist.

4. Einrichtung nach Anspruch 1 oder Anspruch 2 gekennzeichnet durch Mittel (5) zum Angeben der Gesamtanzahl der fehlerhaften und der verlorengegangenen Pakete (PPAQ) nach der vorgegebenen Zeitdauer.

5. Einrichtung nach Anspruch 4, gekennzeichnet durch Mittel (4) zum Berechnen von mindestens einem der Anteile (TPPA) der fehlerhaften Pakete, der verlorenengegangenen Pakete, und der fehlerhaften und verlorengegangenen Pakete im Verhältnis zur Anzahl der empfangenen Pakete (NPAQ), und Mittel (5) zum Angeben von mindestens dem berechneten Anteil (TPPA) nach der vorgegebenen Zeitdauer.

6. Einrichtung nach einem der Ansprüche 1 bis 5, dadurch gekennzeichnet, daß sie in Kombination mit dem Mittel zum Erkennen der Adresse (2) eines jeweiligen digitalen Kanals (VN) Mittel (21, 332) zum Erzeugen eines Impulses in Antwort auf jedes Wort des Datenblocks (BD) des von dem jeweiligen digitalen Kanals (VN) empfangenen Paketen, Mittel (330) zum Zählen der Anzahl der empfangenen Datenworte (NOCT) in dem jeweiligen digitalen Kanal in Antwort auf während der vorgegebenen Zeitdauer erkannten · Impulse, und Mittel (5) zum Angeben der Anzahl der empfangenen Datenworte nach der vorgegebenen Zeitdauer aufweist.

7. Einrichtung nach Anspruch 6, wobei jedes Datenwort eine vorgegebene Parität darstellt, dadurch gekennzeichnet, daß sie in Kombination mit dem Mittel zum Erkennen der Adresse (2) und dem Mittel zum Erzeugen der Impulse (21, 332) eines jeweiligen digitalen Kanals (VN), Mittel (333) zum Verifizieren der Parität der Datenworte der von dem jeweiligen digitalen Kanal empfangenen Pakete, Mittel (331) zum Zählen der Anzahl der fehlerhaft empfangenen Datenworte in Antwort auf von den jeweiligen vorgegebenen Paritäten der Datenworte der jeweiligen digitalen Kanäle während der vorgegebenen Zeitdauer abweichenden Paritäten, und Mittel (5) zum Angeben der Anzahl der Wörter der fehlerhaft empfangenen Datenworten nach der vorgegebenen Zeitdauer aufweist.

8. Einrichtung nach Anspruch 7, gekennzeichnet durch Mittel (4) zum Berechnen des Anteils (TEOC) der fehlerhaften Datenworte im Verhältnis zur Anzahl der empfangenen Datenworte, und Mittel (5) zum Angeben des berechneten Anteils (TEOC).

9. Einrichtung nach einem der Ansprüche 1 bis 8, dadurch gekennzeichnet, daß die Befehlsmittel (4) abwechselnd auf die jeder der jeweiligen digitalen Kanäle zugeordneten Mittel zum Zählen (330, 331, 340, 341) ansprechen, um jedes der Mittel zum Zählen vor der vorgegebenen, jeder der jeweiligen digitalen zugeordneten Zeitdauer auf Null zurückzusetzen, und zum Lesen der jeweiligen Berechnungen des Mittels zum Berechnen nach der vorgegebenen Zeitdauer in Hinblick auf ihre Angabe.

10. Einrichtung nach Anspruch 9, dadurch gekennzeichnet, daß die vorgegebene, jedem der digitalen Kanäle zugeordnete Zeitdauer zyklisch als Funktion der Verfügbarkeit des Befehlsmittels (4) ist, um die den anderen zugeordneten digitalen Kanäle entsprechenden Berechnungen und Adressen zu behandeln.

11. Einrichtung nach einem der vorangehenden Ansprüche 1 bis 10, dadurch gekennzeichnet, daß die Mittel zum Angeben (5) aus einem Fernsehempfänger (52) mit einem Eingangsstecker (53), einer Tastatur (50) zum Zuordnen in dem Befehlsmittel (4) jedes der Mittel zum Erkennen der Adresse zu einem der digitalen Kanäle (VN), und Mittel zum Zwischendecodieren (51) zwischen dem Eingangsstecker (53) und einer digitalen Ausgangsleitung (55) der Befehlsmittel (4) besteht, um Informationen zu decodieren, wobei die Zahl der Mittel zum Erkennen der Adresse, die Adresse des digitalen Kanals und die Berechnungen zur Darstellung auf dem Bildschirm (56) des Fernsehempfängers geeignet sind.

12. Einrichtung nach Anspruch 11, dadurch gekennzeichnet, daß die sich auf die digitalen Kanäle beziehenden Informationen in horizontalen Reihen einer auf dem Bildschirm darstellbaren Tabelle (Abb. 4) auf Befehl des Mittels zum Decodieren (51) angeordnet werden.

13. Einrichtung nach Anspruch 11 oder 12, dadurch gekennzeichnet, daß die Mittel zum Dekodieren (51) einen Alarm erzeugen in Antwort auf einen Meßparameter zum Angeben (nach Berechnung oder Bestimmung), der höher als ein vorgegebener der jeweiligen digitalen Kanäle (VN) entsprechenden Schwelle liegt.

14. Einrichtung nach Anspruch 13, dadurch gekennzeichnet, daß die Mittel zum Decodieren (51) den Alarm durch Blinken, eine Änderung der Farbe oder auf eine entsprechende Art und Weise auf dem Bildschirm wiedergeben.

15. Einrichtung nach Anspruch 13 oder 14, dadurch gekennzeichnet, daß die Mittel zum Decodieren (51, 510) den Alarm durch einen durch den Lautsprecher (58) des Fernsehempfängers (52) wiedergebenden Ton anzeigen.

16. Einrichtung nach einem der Ansprüche 13 bis 15, dadurch gekennzeichnet, daß ein Alarm erzeugt wird, bis die Höchstzahl der Mittel zum Berechnen im Laufe einer vorgegebenen, einem digitalen Kanal entsprechenden Zeitdauer erreicht wird, und die Befehlsmittel (4, 32) eine längere vorgegebene Zeitdauer festsetzen.

17. Einrichtung nach einem der Ansprüche 1 bis 16 zum Messen der paketweise in im wesentlichen analogen Signalen (CT) multiplexten digitalen Kanäle (VN), gekennzeichnet durch Umschaltmittel (1), die die Signale (CT) zum selektiven Zuordnen jedes der Mittel zum Erkennen der Adresse (2) empfangen, wobei die Mittel zum Erkennen der Adressen, die digitalen Kanälen mit einem gleichen Signal zugeordnet sind, ausschließlich das Signal (SV) von den Umschaltungmitteln empfangen.

18. Einrichtung nach Ansprüchen 11 und 17, dadurch gekennzeichnet, daß die Nummer des Signals (VIDEO) ebenfalls auf dem Bildschirm (56) bei jedem zugeordneten digitalen Kanal erscheint.

**Claims**

1 - Equipment for measuring digital channels (VN) packet-multiplexed in a signal particularly analog (SV) having constant time intervals ($T_L$) each including a packet (p), each packet (P) being made up of a heading (ET) including the address (I) of the respective digital channel (VN) and a data block (BD) composed of words (octets) having a predetermined number of bits, characterized in that it comprises in combination for a respective digital channel (VN), means (2) for detecting the address (I) of the respective digital channel in the packets of the signal (SV) and means (340) for counting the number (NPAQ) of received packets included in the respective digital channel (VN) in response to the detected addresses of the respective digital channel over a predetermined time (cycle time), control means (4, 50) each for assigning address detecting means (2) to one of the digital channels, and means (5) for displaying said number of packets received after said predetermined time.

2 - Equipment according to claim 1, for which at least one word (IC) in the heading of each packet comprises an information portion and a redundancy portion derived from the information portion using a predetermined code, characterized in that it comprises in combination with the address detecting means (2) for one respective digital channel (VN), means (21, 342) for decoding the redundancy portion in said word (IC) of the heading for each packet received from the respective digital channel (VN), means (341) for counting the number of erroneous received packets in response to the decoded redundancy portions not corresponding to the information portions of said words (IC) in the headings of received packets from the digital channel throughout said predetermined time, and means (5) for displaying said number of erroneous received packets after said predetermined time.

3 - Equipment according to claim 1 or 2, for which at least one word (IC) in the heading of the packets of each of the digital channel is incremented by unity modulo a predetermined integer number (16) for each digital channel (VN) packet transmitted in the signal (SV), characterized in that it comprises in combination with the address detecting means (2) for one respective digital channel (VN), means (342) for memorizing said word (IC) in the heading of each packet received from the respective digital channel (VN), means (342) for comparing said heading word (IC) of the received packet against said memorized heading word (IC) of the previously received packet, means for counting the number of lost packets in response to differences in said words (IC) of two successive received packets from the respective digital channel greater than unity modulo said predeteimined number over the predetermined time, and means (5) for displaying said number of lost packets after said predetermined time.

4 - Equipment according to claims 2 and 3, characterized in that it comprises means (5) for displaying the whole number of erroneous and lost packets (PPAQ) after said predetermined time.

5 - Equipment according to claim 4, characterized in that it comprises means (4) for calculating at least one of the ratio (TTPA) of erroneous packets, lost packets and erroneous and lost packets with respect to the number of received packets (NPAQ) and means (5) for displaying at least the calculated ratio (TPPA) after the predetermined time.

6 - Equipment according to one of claims 1 to 5, characterized in that it comprises in combination with the address detecting means (2) for one respective digital channel (VN), means (21, 332) for generating a pulse in response to each word of the data block (BD) in the received packets of the respective digital channel (VN), means (330) for counting the number (NOCT) of received data words in the respective digital channel in response to the pulses detected during the predetermined time, and means (5) for displsying said number of received data words after said predetermined time.

7 - Equipment according to claim 6 in which each data word carries a predetermined parity, characterized in that it comprises in combination with the address detecting means (2) and pulse generating means (21, 332) for one respective digital channel (VN), means (333) for checking the parity of the data words in the packets received from the respective digital channel, means (331) for counting the number of erroneous received data words in response to parities differing from the respective predetermined parities of the data words from the respective digital channel over the predetermined time, and means (5) for displaying said number of erroneous received data words after said predetermined time.

8 - Equipment according to claim 7, characterized in that it comprises means (4) for calculating the ratio (TEOC) of erroneous data words with respect to the number of received data words and means (5) for displaying the calculated ratio (TEOC).

9 - Equipment according to one of claims 1 to 8, characterized it that the control means (4) address in shared time the counting means (330, 331, 340, 341) assigned to respective digital channels for zero-resetting each of said counting means before the predetermined time assigned to the respective digital channel and for reading the counts in the respective counting means after said predetermined time with a view to their display.

10 - Equipment according to claim 9, characterized in that the predetermined time assigned to each digital channel is cyclic in terms of the availability of control means (4) to process in perticular the counts and addressings in relation to the other assigned digital channels.

11 - Equipment according to one of claims 1 to 10, characterized in that the displaying means (5) comprises a television receiver (52) equipped with a peritelevision socket (53), a keyboard (50) for assigning in the control means (4) each of the address detecting means (2) to a digital channel (VN), and intermediate decoding means (51) between the peritelevision socket (53) and an output digital link (55) from the control means (4) for decoding information such as the number of the address detecting means, the address of the digital channel and the counts, into characters intended for visualization on the screen (56) of the television receiver.

12 - Equipment according to claim 11, characterized in that the information related to the digital channels is arranged in horizontal rows of a table (Fig. 4) displayed on said screen (56) under the control of the decoding means (51).

13 - Equipment according to claim 11 or 12, characterized in that the decoding means (51) produces an alarm in response to a measurement parameter to be displayed (count or ratio) greater than a respective predetermined threshold in relation to each digital channel (VN).

14 - Equipment according to claim 13, characterized in that the decoding means (51) transform the alarm visually on the screen by flashing the parameter, colour changing or like the parameter.

15 - Equipment according to claim 13 or 14, characterized in that the decoding means (51, 510) transform the alarm by a howling emitted by the loudspeaker (58) of television receiver (52).

16 - Equipment according to one of claims 13 to 15, characterized in that, when the maximum count of counting means is reached over a predetermined time assigned to a digital channel, an alarm is generated and the control means (4, 32) assign a longer predetermined time.

17 - Equipment according to one of claims 1 to 16 for measuring digital channels (VN) multiplexed by packets in signals particularly analog (CT), characterized in that it comprises switching means (1) receiving said signals (CT) for selectively assigning each of address detecting means (2) to one of the signal digital channels, the address detecting mesns assigned to digital channels of a same signal receiving solely said signal (SV) from switching means.

18 - Equipment according to claims 11 and 17, characterized in that the number (VIDEO) of the signal is also displayed on the screen (56) for each assigned digital channel.

# FIG.1

$T_L = 64\mu s$

$10,5\mu s$

P

$12\mu s$

ET

BD

$4,7\mu s$

$5,8\mu s$

B₁ B₂ 0 I₁ I₂ I₃ C F

Octet

# FIG.4

TABLEAU SUR L'ECRAN 56 DU RECEPTEUR 52

RANGÉE

| | CR | VIDEO | NVOI | NPAQ | NOCT | PPAQ | TEOC | TPPA |
|---|---|---|---|---|---|---|---|---|
| | 01 | FR3 | 0001 | ---- | ---- | ---- | ---- | ---- |
| | 02 | A2 | 0004 | | | | | |
| | 20 | TF1 | 0005 | | | | | |

1

# FIG.2

FIG.3